# EUROPÄISCHE PATENTANMELDUNG

(11) **EP 4 299 879 A1**
(43) Veröffentlichungstag der Anmeldung: **03.01.2024**
(21) Anmeldenummer: 23180613.4
(22) Anmeldetag: 21.06.2023
(51) Int. Cl.: F01B 1/06, F03C 1/047, F15B 7/00, F16H 61/40

(54) **ANTRIEBSSYSTEM**

(30) Priorität: 30.06.2022 DE 102022206651
(71) Anmelder: Robert Bosch GmbH, 70442 Stuttgart (DE)
(72) Erfinder: Barriga Garcia, Benjamin Daniel, 30419 Hannover (DE); Schwittay, Olaf, 30880 Laatzen (DE)

(57) **Zusammenfassung**

Die vorliegende Offenbarung betrifft ein Antriebssystem (1) mit einem Ventilsystem (2), zumindest einer Druckquelle (3) und zumindest einem Radialkolbenmotor (4), welcher einen Hubring (5), mehrere Kolben (6), eine Triebwelle (7) und zwei Arbeitsanschlüsse (A, B) aufweist, welche mittels des Ventilsystems (2) wahlweise mit der Druckquelle (3), insbesondere einer Hubvolumen-verstellbaren Axialkolbenmaschine, strömungstechnisch verbindbar sind, um in einem Arbeitsbetrieb des Radialkolbenmotors (4) ein unter einem Arbeitsdruck stehendes Fluid einem der zwei Arbeitsanschlüsse (A oder B) zuzuführen, so dass die Kolben (6) an dem Hubring (5) anliegend in Umfangrichtung (u) an dem Hubring (5) entlanglaufen, so dass die Triebwelle (7) angetrieben wird, wobei in einem Freilaufbetrieb des Radialkolbenmotors (4) die Kolben (6) in einer jeweiligen Ruheposition (P_{R}) haltbar sind, in welcher ein Kontakt zwischen dem Hubring (5) und den Kolben (6) vermieden ist, so dass auch bei einer Drehung der Triebwelle (7) kein Fluid mittels der Kolben (6) von einem (A oder B) zu dem anderen Arbeitsanschluss (B oder A) förderbar ist.

Ein Übergang von dem Freilaufbetrieb in den Arbeitsbetrieb ist verbessert, indem bei dem Übergang von dem Freilaufbetrieb in den Arbeitsbetrieb beide Arbeitsanschlüsse (A, B) mittels des Ventilsystems (2) und der Druckquelle (3) mit einem Ausfahrdruck beaufschlagt sind, so dass die Kolben (6) von ihrer jeweiligen Ruheposition (P_{R}) in Richtung des Hubringes (5) bewegt werden, bis ein jeder der Kolben (6) an dem Hubring (5) anliegt.

## Beschreibung

Die vorliegende Erfindung betrifft ein Antriebssystem gemäß dem Oberbegriff des Patentanspruchs 1, insbesondere ein Antriebssystem mit einem Ventilsystem, zumindest einer Druckquelle und zumindest einem Radialkolbenmotor.

### Hintergrund der Erfindung

Der Radialkolbenmotor des Antriebssystems der vorstehend genannten Bauart weist einen Hubring, mehrere Kolben, eine Triebwelle und zwei Arbeitsanschlüsse auf. Die Arbeitsanschlüsse sind mittels des Ventilsystems wahlweise mit der Druckquelle, insbesondere einer Hubvolumen-verstellbaren Axialkolbenmaschine, strömungstechnisch verbindbar, um in einem Arbeitsbetrieb des Radialkolbenmotors ein unter einem Arbeitsdruck stehendes Fluid einem der zwei Arbeitsanschlüsse zuzuführen, so dass die Kolben an dem Hubring anliegend in Umfangrichtung an dem Hubring entlanglaufen, so dass die Triebwelle angetrieben wird. In einem Freilaufbetrieb des Radialkolbenmotors sind die Kolben in einer jeweiligen Ruheposition haltbar, in welcher ein Kontakt zwischen dem Hubring und den Kolben vermieden ist, so dass auch bei einer Drehung der Triebwelle kein Fluid mittels der Kolben von einem zu dem anderen Arbeitsanschluss förderbar ist. Die Kolben können z.B. in ihre jeweilige Ruheposition bewegt werden, indem ein Druck an einen, zwischen den Kolben und dem Hubring ausgebildeten Innenraum des Radialkolbenmotors angelegt wird.

### Stand der Technik

Aus der EP 3 608 535 B1 ist ein derartiges Antriebssystem mit einem Ventilsystem, einer Druckquelle und einer Radialkolbenmaschine bekannt, welche als Radialkolbenmotor betreibbar ist. Die Kolben sind hier in eine aktive Gruppe und mindestens eine schaltbare Gruppe unterteilt, um mindestens zwei Verdrängungsmodi der Radialkolbenmaschine mit unterschiedlichen Verdrängungsvolumen umzusetzen. Jeder Kolben kann dazu einzeln durch Magnetkraft in einer Bohrung für diesen Kolben in einem die Vielzahl von Bohrungen aufweisenden Zylinderblock radial nach innen gezogen und dort in seiner Ruheposition gehalten werden. Die zurückgezogenen Kolben tragen im Motorbetrieb dann nicht zum Antrieb der Triebwelle bei. Die Bohrungen weisen an die Kolben angrenzende Druckräume auf, welche während der Rotation der Triebwelle alternierend mit den beiden Arbeitsanschlüssen strömungstechnisch verbunden werden.

Bei derartigen Radialkolbenmotoren ergibt sich ein Problem, wenn von dem Freilaufbetrieb in den Arbeitsbetrieb geschaltet werden soll, bzw. wenn Kolben aus ihrer jeweiligen Ruheposition in ihre jeweilige Position mit Kontakt zum Hubring bewegt werden sollen. Dieser Übergang von dem Freilaufbetrieb in den Arbeitsbetrieb wird eingeleitet, indem an einen der beiden Arbeitsanschlüsse ein Hochdruck angelegt wird, welcher im Arbeitsbetrieb auch zum Antrieb des Radialkolbenmotors dient. Die sich in der Ruheposition befindenden, eingefahrenen Kolben, die an den dann Hochdruck führenden Arbeitsanschluss angeschlossen sind, werden bei diesem Übergang schlagartig nach außen bewegt. In der Folge kann der Druck im Innenraum des Radialkolbenmotors schnell übermäßig ansteigen, weil dort Fluid verdrängt wird, welches nur entgegen einem hohen Strömungswiderstand zu einem Tank abfließen kann. Bei der ersten halben Umdrehung des Radialkolbenmotors wiederholt sich dieser Vorgang mit jedem Kolben, der erstmalig mit dem Hochdruck beaufschlagt wird. Während dieses Übergangs werden somit schwankende Drehmomente an der Triebwelle erzeugt. Weiterhin können die schlagartigen bzw. stoßartigen Belastungen der Kolben zu Beschädigungen, insbesondere der Kolben selbst und/oder des Hubringes, zumindest aber zu erhöhtem Verschleiß führen. Wird der Radialkolbenmotor zum Antrieb eines Fahrzeuges genutzt, ist dann weiterhin nur ein unsanftes Anfahren dieses Fahrzeuges möglich.

### Kurzbeschreibung der Erfindung

Der vorliegenden Erfindung liegt die Aufgabe zugrunde, ein Antriebssystem bereitzustellen, welches die Probleme des Stands der Technik reduziert oder beseitigt. Insbesondere soll der Übergang eines Radialkolbenmotors von dem Freilaufbetrieb in den Arbeitsbetrieb verbessert werden und weiterhin sollen Stöße auf Teile des Radialkolbenmotors während dieses Übergangs reduziert werden.

Diese Aufgabe wird durch ein Antriebssystem gemäß Anspruch 1 gelöst.

Weitere vorteilhafte Ausführungsformen sind Gegenstand der Unteransprüche.

Genauer wird die Aufgabe gelöst, indem bei einem Übergang von dem Freilaufbetrieb in den Arbeitsbetrieb beide Arbeitsanschlüsse mittels des Ventilsystems und der Druckquelle mit einem Ausfahrdruck beaufschlagt sind, so dass die Kolben von ihrer jeweiligen Ruheposition in Richtung des Hubringes bewegt werden, bis ein jeder der Kolben an dem Hubring anliegt.

Auf diese Weise können die Kolben sanft nach außen bewegt werden, bis sie am Hubring anliegen. Stöße auf die Kolben werden somit minimiert, so dass auch der Verschleiß der Kolben bzw. angrenzender Bauteile minimiert ist. Auch werden Druckspitzen von Fluiden in an die Kolben angrenzenden Räumen und Dichtspalten aufgrund des sanften Ausfahrens sicher vermieden, so dass insbesondere auch entsprechende Dichtungen vor einer Beschädigung beschützt sind. Der Ausfahrdruck wird dabei so gewählt, dass das sanfte Ausfahren ermöglicht ist. Es ist ein besonders gleichmäßiger Anstieg des mittels der Triebwelle bereitgestellten Drehmomentes während des Übergangs von dem Freilaufbetrieb in den Arbeitsbetrieb erreichbar. Eine Position eines Kolbens, in der der Kolben an dem Hubring anliegt, wird auch als Arbeitsposition des Kolbens bezeichnet.

Bevorzugt ist der Ausfahrdruck um eine bestimmte Druckdifferenz größer, als ein an die Druckquelle gemeldeter Druck, welcher während des Übergangs von dem Freilaufbetrieb in den Arbeitsbetrieb üblicherweise einen Wert von Null aufweist.

Die bestimmte Druckdifferenz ist z.B. mittels eines Reglers erzeugbar. Die bestimmte Druckdifferenz wird insbesondere mittels eines Standby-Drucks der Druckquelle, insbesondere der Hubvolumen-verstellbaren Axialkolbenmaschine, erzeugt, eben wenn der an die Druckquelle gemeldete Druck einen Wert von Null aufweist. Der Standby-Druck der Druckquelle entspricht dabei einer sogenannten Grundeinstellung der Druckquelle. Z.B. wird der von der Hubvolumen-verstellbaren Axialkolbenmaschine, bereitgestellte Druck insbesondere mittels des Reglers durch Verstellung des Verdrängungsvolumens eingeregelt.

Weiter bevorzugt ist ein Ausfahrventil strömungstechnisch zwischen den beiden Arbeitsanschlüssen einerseits und der Druckquelle und einem Tank anderseits angeordnet, um in einer Ausfahrventilstellung bei dem Übergang von dem Freilaufbetrieb in den Arbeitsbetrieb beide Arbeitsanschlüsse mit dem Ausfahrdruck zu beaufschlagen und um in einer Fahrventilstellung in dem Freilaufbetrieb oder dem Arbeitsbetrieb keinen oder nur einen der beiden Arbeitsanschlüsse mit einem Druck zu beaufschlagen.

Mittels dieses Ausfahrventils ist das sanfte Ausfahren der Kolben während des Übergangs von dem Freilaufbetrieb in den Arbeitsbetrieb mit geringem vorrichtungs- und steuerungstechnischem Aufwand durchführbar. Das Ausfahrventil ist vorzugsweise als 4/2-Wegeventil mit zwei Durchflusswegen ausgeführt.

Nach einer bevorzugten Ausführungsform des Antriebssystems sind beide Arbeitsanschlüsse mit jeweils einem Nachsaugventil mit einem Rückschlagventil und einem strömungstechnisch parallel dazu geschalteten Druckbegrenzungsventil strömungstechnisch verbunden. Mittels der Rückschlagventile ist eine Fluidströmung vom dem Ausfahrventil zu dem jeweiligen Arbeitsanschluss ermöglicht und eine entsprechende Rückströmung vermieden. Mittels der Druckbegrenzungsventile ist ein Druck an den jeweiligen Arbeitsanschlüssen auf einen bestimmten, maximalen Wert begrenzt.

Das Rückschlagventil und das Druckbegrenzungsventil eines der Nachsaugventile sind vorzugsweise in einem einzigen Bauteil vereint, welches vorzugsweise als Einbau- bzw. Einschraubventil ausgebildet ist.

Vorteilhafter Weise sind während des Überganges von dem Freilaufbetrieb in den Arbeitsbetrieb beide Arbeitsanschlüsse von der Druckquelle über die jeweiligen Rückschlagventile mit Druck beaufschlagt.

Ein Ablassventil ist in einer besonders bevorzugten Ausführungsform des Antriebssystems an einen Innenraum des Radialkolbenmotors angeschlossenen. Das Ablassventil ist während des Überganges von dem Freilaufbetrieb in den Arbeitsbetrieb geöffnet, um Fluid aus dem Innenraum des Radialkolbenmotors unter geringem Gegendruck zum Tank hin abfließen zu lassen.

Dadurch wird die Bewegung der Kolben von ihrer jeweiligen Ruheposition in ihre jeweilige Arbeitsposition erleichtert, unter Umständen auch erst ermöglicht. Zumindest ist ein geringerer Ausfahrdruck nötig, wenn das Ablassventil während des Überganges von dem Freilaufbetrieb in den Arbeitsbetrieb geöffnet ist. Das Ablassventil ist während des Freilaufbetriebs und während des Überganges von dem Arbeitsbetrieb in den Freilaufbetrieb geschlossen, so dass kein Fluid aus dem Innenraum des Radialkolbenmotors unter geringem Gegendruck zum Tank hin abfließen kann.

Bevorzugterweise ist der Innenraum des Radialkolbenmotors während eines Überganges von dem Arbeitsbetrieb in den Freilaufbetrieb mit einem Einfahrdruck beaufschlagt, so dass die Kolben von Ihrer jeweiligen Position mit Kontakt zum Hubring in ihre jeweilige Ruheposition bewegt werden.

Der Übergang von dem Arbeitsbetrieb in den Freilaufbetrieb ist auf diese Weise mit minimalem vorrichtungstechnischem Aufwand umsetzbar. Der Radialkolbenmotor kann im Freilaufbetrieb dann wieder passiv mit höheren Drehzahlen betrieben werden.

Das Fluid wird vorteilhafter Weise während des Überganges von dem Arbeitsbetrieb in den Freilaufbetrieb von der Druckquelle dem Innenraum des Radialkolbenmotors über ein dann geöffnetes Einfahrventil und einen Stromregler zugeführt.

Die Funktion des Stromreglers ist auch mittels des dann geschlossenen Ablassventils sichergestellt. Mittels des Stromreglers ist vorzugsweise ein Volumenstrom von 15 l/min bis 25 l/min, insbesondere ein Volumenstrom von 20 l/min, dem Innenraum des Radialkolbenmotors zuführbar.

Nach einer weiteren bevorzugten Ausführungsform des Antriebssystems ist zumindest ein weiteres Rückschlagventil strömungstechnisch zwischen dem Innenraum und dem Tank angeordnet, so dass mittels dieses Rückschlagventils eine Fluidströmung vom Innenraum zum Tank ermöglicht und eine entsprechende Rückströmung vermieden ist. Mittels dieses Rückschlagventils ist ein Druck in dem Innenraum auf einen bestimmten, maximalen Wert, insbesondere von 2 bar, begrenzt.

Somit ist weiterhin auch sichergestellt, dass während des Freilaufbetriebes im Innenraum ein genügend hoher Druck anliegt, um die Kolben in ihrer Ruheposition zu halten.

Vorteilhafterweise ist zumindest ein weiteres Rückschlagventil strömungstechnisch zwischen einem Stellanschluss der Druckquelle und dem Ausfahrventil angeordnet, so dass mittels dieses Rückschlagventils während des Überganges von dem Freilauf in den Arbeitsbetrieb eine Fluidströmung vom Stellanschluss über das Ausfahrventil zum Tank ermöglicht und ein Druckanstieg in einer an den Stellanschluss der Druckquelle angeschlossenen Steuerleitung sicher verhindert wird.

So kann eine Steuerung- und/oder Regelung der Druckquelle vereinfacht werden und insbesondere ein Aufschaukeln des mittels der Druckquelle bereitgestellten Druckes vermieden werden, da nämlich mittels des an dem Stellanschluss anliegenden Druckes die Druckquelle steuer- und/oder regelbar ist. Der Stellanschluss wird auch als Lastmeldeanschluss LS bezeichnet und ist insbesondere an dem Regler der Druckquelle ausgebildet.

In einer weiteren, bevorzugten Ausführungsform des Antriebssystems ist zwischen den beiden Arbeitsanschlüssen des zumindest einen Radialkolbenmotors und dem Stellanschluss der Druckquelle eine Wechselventil-Kaskade strömungstechnisch angeordnet, so dass der Stellanschluss mit dem maximalen, an einem der Arbeitsanschlüsse anliegenden Druck beaufschlagt wird.

Somit ist sichergestellt, dass mittels der Druckquelle immer ein ausreichend hoher Druck zum Betrieb des zumindest einen Radialkolbenmotors bereitgestellt wird. Der genannte Regler weist insbesondere einen mittels einer Feder vorgespannten Kolben auf, welcher auf einer der Feder abgewandten Seite über den Stellanschluss mit dem maximalen, an einem der Arbeitsanschlüsse anliegenden Druck über die Steuerleitung beaufschlagt wird. Die Druckquelle ist dann mittels der Stellung des Kolbens steuerbar, wobei in der Grundstellung, wenn der Kolben aufgrund der Federkraft maximal ausgelenkt ist, mittels der Druckquelle der Standby-Druck bereitgestellt wird. Das weitere Rückschlagventil, welches strömungstechnisch zwischen dem Stellanschluss der Druckquelle und dem Ausfahrventil angeordnet ist, ist insbesondere deutlich weniger vorgespannt als der Kolben des Reglers, so dass mittels dieses Rückschlagventils während des Überganges von dem Freilauf in den Arbeitsbetrieb der Druckanstieg in der Steuerleitung der Druckquelle sicher verhindert ist.

Ein Stelldruck-Begrenzungsventil ist vorteilhafterweise strömungstechnisch zwischen dem Stellanschluss der Druckquelle und dem Tank angeordnet, um den an dem Stellanschluss anliegenden Druck auf einen bestimmten, maximalen Wert zu begrenzen.

So können Beschädigungen an dem Stellanschluss bzw. der Druckquelle selbst durch einen zu hohen Druck am Stellanschluss vermieden werden.

In einer weiteren, vorteilhaften Ausführungsform des Antriebssystems sind Arbeitsdruck-Begrenzungsventile strömungstechnisch jeweils zwischen einem der Arbeitsanschlüsse und dem Tank angeordnet, um den Fluidstrom zwischen den Arbeitsanschlüssen und der Wechselventil-Kaskade zu begrenzen.

Auf diese Weise kann das Risiko von Beschädigungen an der Wechselventil-Kaskade verringert werden. Weiterhin wirkt sich eine derartige Begrenzung des Druckes positiv auf die Steuer- und/oder Regelbarkeit der Druckquelle aus.

Bevorzugterweise ist ein Förderdruck-Begrenzungsventil strömungstechnisch zwischen der Druckquelle und dem Tank angeordnet, um den Fluidstrom von der Druckquelle zu den Arbeitsanschlüssen hin zu begrenzen.

So kann der Radialkolbenmotor vor zu hohen Drücken an den Arbeitsanschlüssen und somit zu hohen Drehmomenten, für welche der Radialkolbenmotor nicht ausgelegt ist, geschützt werden.

Es sind vorzugsweise vier Radialkolbenmotoren vorgesehen und vorhanden, um jeweils ein Rad eines Fahrzeuges, insbesondere eines Straßendeckenfertigers, anzutreiben.

Das oben beschriebene Ventilsystem ist dabei in der Lage alle diese vier Radialkolbenmotoren wie benötigt mit der Druckquelle und dem Tank zu verbinden. Z.B. werden bei einem Übergang von dem Freilaufbetrieb in den Arbeitsbetrieb beide Arbeitsanschlüsse aller vier Radialkolbenmotoren mittels des Ventilsystems und der Druckquelle mit dem Ausfahrdruck beaufschlagt, so dass die Kolben aller vier Radialkolbenmotoren von ihrer jeweiligen Ruheposition in Richtung des jeweiligen Hubringes bewegt werden, bis ein jeder der Kolben an dem zugehörigen Hubring anliegt.

In einer vorteilhaften Ausführungsform des Antriebssystems sind die Leckageanschlüsse eines jeden der vier Radialkolbenmotoren strömungstechnisch zusammengefasst und gemeinsam strömungstechnisch mit dem Ablassventil und dem strömungstechnisch zwischen dem Innenraum und dem Tank angeordneten Rückschlagventil verbunden, um den Druck in den jeweiligen Innenräumen auf einen bestimmten, maximalen Wert, insbesondere von 2 bar, zu begrenzen.

Somit sind dann auch gleichzeitig alle Kolben aller vier Radialkolbenmotoren von ihrer jeweiligen Arbeitsposition in ihre jeweilige Ruheposition während der Übergänge von den Arbeitsbetrieben in die Freilaufbetriebe führbar. Es ist auch denkbar, dass das Antriebssystem 1, 2, 3 oder mehr als 4 Radialkolbenmotoren aufweist.

Zusammenfassend ist ein solches Antriebssystems zu vielfältigen Anwendungen geeignet, wie z.B. zum Antrieb von Rädern eines Fahrzeuges, insbesondere eines Straßendeckenfertigers.

### Kurzbeschreibung der Figuren

Im Nachfolgenden werden bevorzugte Ausführungsformen unter Bezugnahme auf die anliegenden Figuren näher dargestellt.
Fig. 1a zeigt ein Hydraulikschema eines Antriebssystems mit einem Ventilsystem, einer Druckquelle und zumindest einem Radialkolbenmotor nach einer bevorzugten Ausführungsform der Erfindung, mit dem Ventilsystem in einem Zustand eines Arbeitsbetriebs des Antriebssystems.
Fig. 1b zeigt das Hydraulikschema aus Fig.1a, mit dem Ventilsystem in einem Zustand eines Freilaufbetriebs des Antriebssystems.
Fig. 1c zeigt das Hydraulikschema aus Fig.1a, mit dem Ventilsystem in einem Zustand des Übergangs von dem Freilaufbetrieb in den Arbeitsbetrieb.
Fig. 2 zeigt in einer schematischen Schnittdarstellung den Radialkolbenmotor aus Fig.1 in einem Arbeitsbetrieb.
Fig. 3 zeigt in einer schematischen Schnittdarstellung den Radialkolbenmotor aus Fig.1 in einem Freilaufbetrieb.

### Beschreibung bevorzugter Ausführungsbeispiele

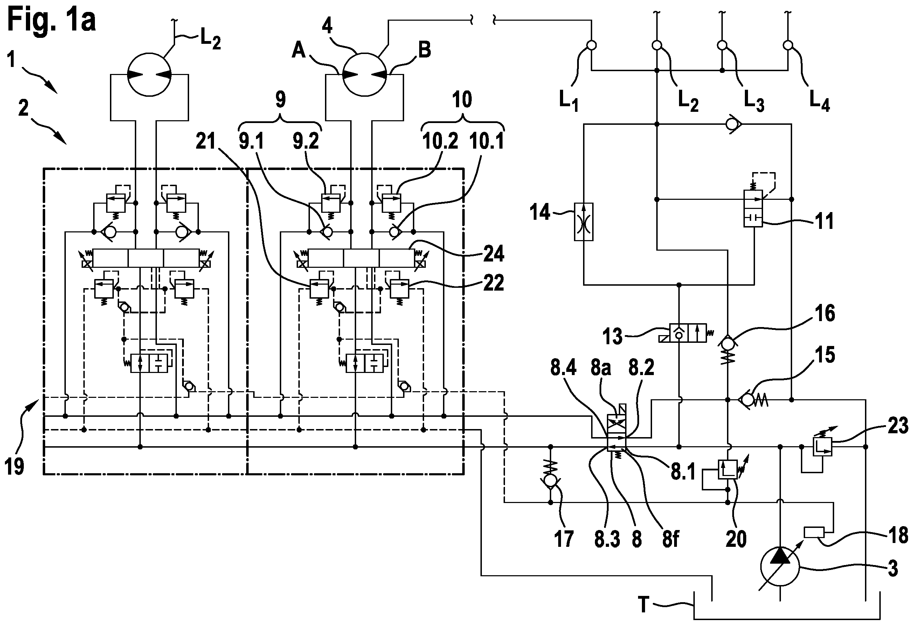

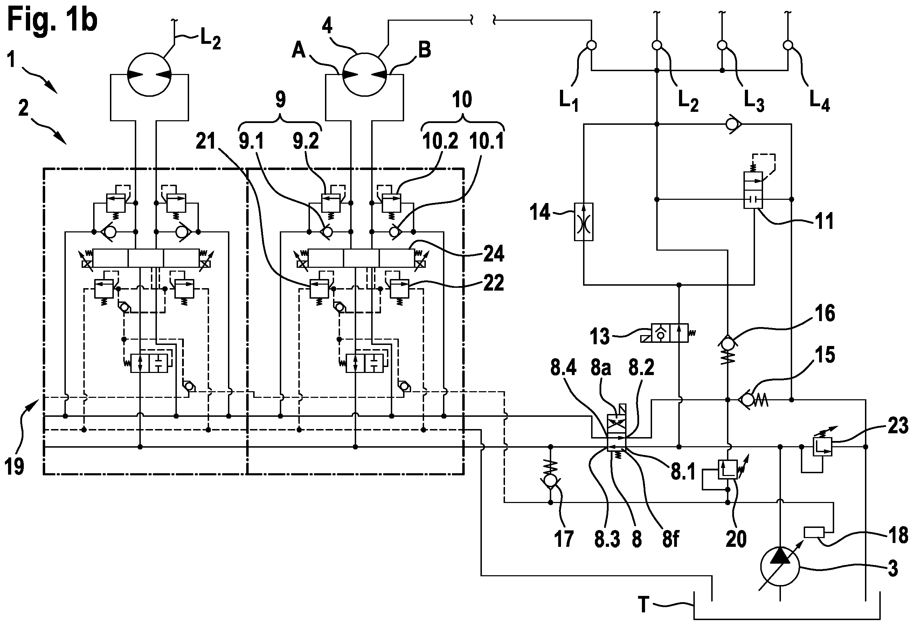

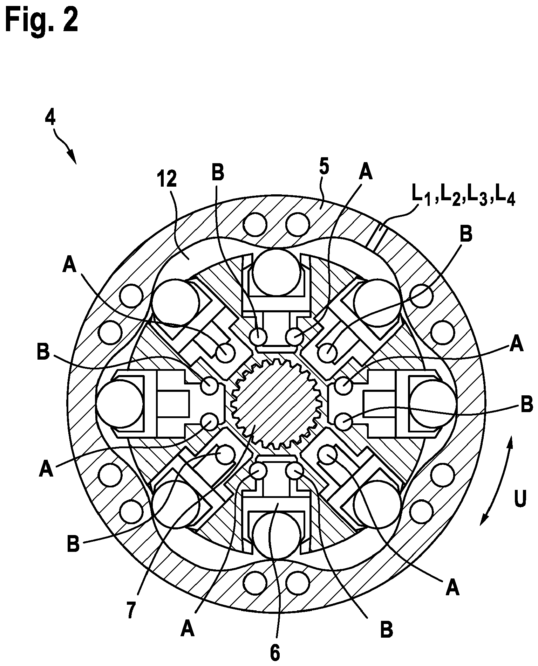

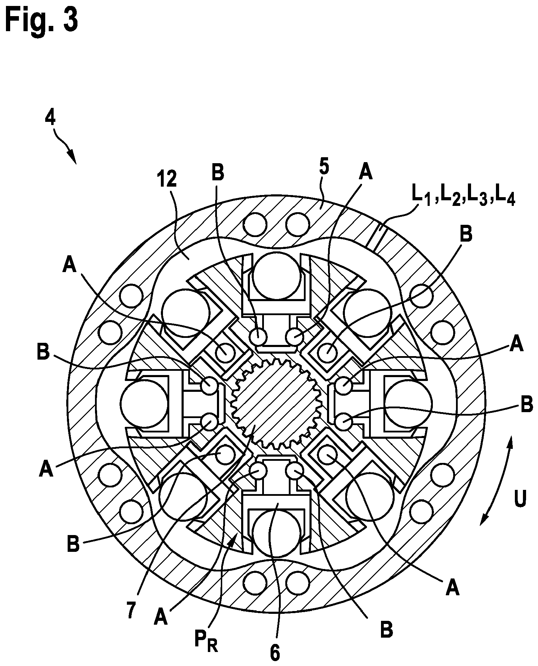

Das Antriebssystem 1 weist gemäß Fig.1a-c ein Ventilsystem 2, zumindest eine Druckquelle 3 und zumindest einen Radialkolbenmotor 4 auf. Der Radialkolbenmotor 4 weist einen Hubring 5, mehrere Kolben 6, eine Triebwelle 7 und zwei Arbeitsanschlüsse A, B auf. Die Arbeitsanschlüsse A, B sind mittels des Ventilsystems 2 wahlweise mit der Druckquelle 3, insbesondere einer Hubvolumen-verstellbaren Axialkolbenmaschine, strömungstechnisch verbindbar, um in einem Arbeitsbetrieb des Radialkolbenmotors 4 ein unter einem Arbeitsdruck stehendes Fluid einem der zwei Arbeitsanschlüsse A oder B zuzuführen, so dass die Kolben 6 an dem Hubring 5 anliegend in Umfangrichtung u an dem Hubring 5 entlanglaufen, so dass die Triebwelle 7 angetrieben wird. Fig.2 zeigt den Radialkolbenmotor 4 in dem Arbeitsbetrieb. Zugehörig ist in Fig.1a das Ventilsystem 2 in einem Zustand des Arbeitsbetriebs des Antriebssystems 1 gezeigt. In einem Freilaufbetrieb des Radialkolbenmotors 4 sind die Kolben 6 in einer jeweiligen Ruheposition P_{R} haltbar, in welcher ein Kontakt zwischen dem Hubring 5 und den Kolben 6 vermieden ist, so dass auch bei einer Drehung der Triebwelle 7 kein Fluid mittels der Kolben 6 von einem Arbeitsanschluss A oder B zu dem anderen Arbeitsanschluss B oder A förderbar ist. Fig.3 zeigt den Radialkolbenmotor 4 in dem Freilaufbetrieb. Zugehörig ist in Fig.1b das Ventilsystem 2 in einem Zustand des Freilaufbetriebs des Antriebssystems 1 gezeigt. Für gleiche Bauteile werden in den Figuren gleichen Bezugszeichen verwendet.

Die hier beschriebenen strömungstechnischen Verbindungen sind auf verschiedene Arten ausführbar, z.B. mit Schläuchen, Rohren und/oder in Gehäusen ausgebildeten Strömungskanälen.

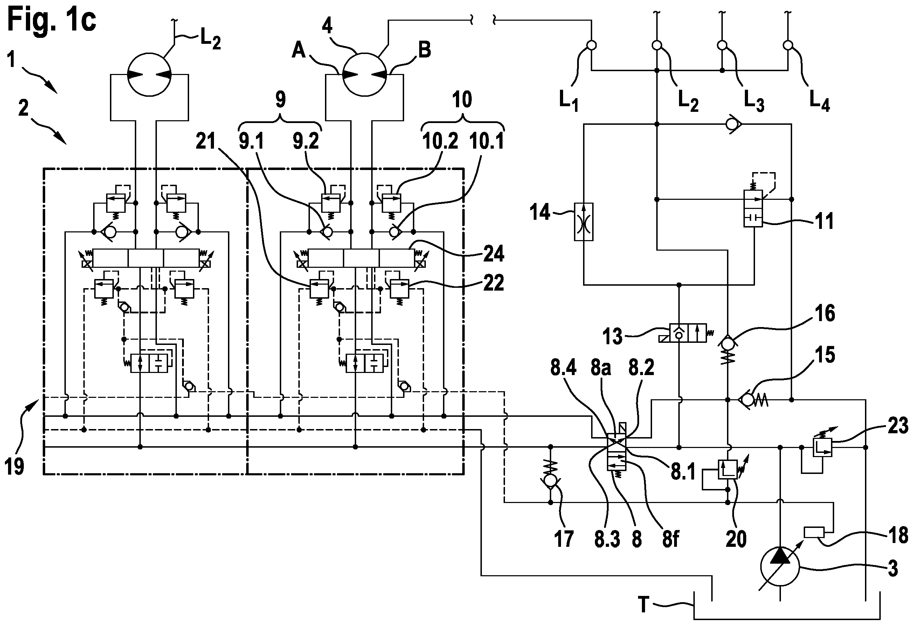

Bei einem Übergang von dem Freilaufbetrieb in den Arbeitsbetrieb sind beide Arbeitsanschlüsse A, B mittels des Ventilsystems 2 und der Druckquelle 3 mit einem Ausfahrdruck beaufschlagt, so dass die Kolben 6 von ihrer jeweiligen Ruheposition P_{R} in Richtung des Hubringes 5 bewegt werden, bis ein jeder der Kolben 6 an dem Hubring 5 anliegt. Fig.1c zeigt das Ventilsystem 2 in dem Zustand dieses Übergangs von dem Freilaufbetrieb in den Arbeitsbetrieb.

Ist die Druckquelle 3 als Hubvolumen-verstellbaren Axialkolbenmaschine ausgebildet, so wird diese zur Bereitstellung des Ausfahrdruckes mit einer entsprechenden Drehzahl und einer entsprechenden Schrägstellung einer Schwenkwiege der Hubvolumen-verstellbaren Axialkolbenmaschine betrieben.

Der Ausfahrdruck ist um eine bestimmte Druckdifferenz größer als ein an die Druckquelle 3 gemeldeter Druck.

Die Druckquelle 3, insbesondere die Hubvolumen-verstellbaren Axialkolbenmaschine, wird derart gesteuert und/oder geregelt, dass diese bestimmte Druckdifferenz erreicht wird. Dazu wird vorzugsweise der maximale, an einem der Arbeitsanschlüsse A, B anliegende Druck an eine Steuerungs- und/oder Regelungseinrichtung der Druckquelle 3 gemeldet / übermittelt. Dies könnte z.B. mittels eines Drucksensors und einer zwischen dem Drucksensor und einer Steuerungs- und/oder Regelungseinrichtung der Druckquelle 3 ausgebildeten Datenverbindung erfolgen.

Ein Ausfahrventil 8 ist strömungstechnisch zwischen den beiden Arbeitsanschlüssen A, B einerseits und der Druckquelle 3 und einem Tank T anderseits angeordnet, um in einer Ausfahrventilstellung 8a, welche gemäß Fig.1c geschaltet ist, bei dem Übergang von dem Freilaufbetrieb in den Arbeitsbetrieb beide Arbeitsanschlüsse A, B mit dem Ausfahrdruck zu beaufschlagen und um in einer Fahrventilstellung 8f, welche gemäß Fig.1a und b geschaltet ist, in dem Freilaufbetrieb oder dem Arbeitsbetrieb keinen oder nur einen der beiden Arbeitsanschlüsse A, B mit einem Druck zu beaufschlagen. Das Ausfahrventil 8 befindet sich in der Fahrventilstellung 8f in einer Grundstellung des Ausfahrventils 8, welche sich insbesondere ohne Bestromung des Ausfahrventils 8 einstellt.

Das Ausfahrventil 8 ist z.B. als 4/2-Wegeventil mit zwei Durchflusswegen ausgeführt. Ein erster Anschluss 8.1 und ein zweiter Anschluss 8.2 des Ausfahrventils 8 sind wie folgt beschrieben mit einem dritten Anschluss 8.3 und vierten Anschluss 8.4 des Ausfahrventils 8 verbindbar. In der Ausfahrventilstellung 8a wird der erste Anschluss 8.1 mit dem vierten Anschluss 8.4 und der zweite Anschluss 8.2 mit dem dritten Anschluss 8.3 verbunden. In der Fahrventilstellung 8f wird der erste Anschluss 8.1 mit dem dritten Anschluss 8.3 und der zweite Anschluss 8.2 mit dem vierten Anschluss 8.4 verbunden.

Beide Arbeitsanschlüsse A, B sind mit jeweils einem Nachsaugventil 9, 10 mit einem Rückschlagventil, nämlich einem ersten Rückschlagventil 9.1 und einem zweiten Rückschlagventil 10.1, und einem jeweils strömungstechnisch parallel dazu geschalteten Druckbegrenzungsventil, nämlich einem ersten Druckbegrenzungsventil 9.2 und einem zweiten Druckbegrenzungsventil 10.2, strömungstechnisch verbunden. Mittels der Rückschlagventile 9.1, 10.1 ist eine Fluidströmung vom dem Ausfahrventil 8 zum dem jeweiligen Arbeitsanschluss A, B ermöglicht und eine entsprechende Rückströmung vermieden. Mittels der Druckbegrenzungsventile 9.2, 10.2 ist ein Druck an den jeweiligen Arbeitsanschlüssen A, B auf einen bestimmten, maximalen Wert begrenzt.

Die beiden Nachsaugventile 9, 10 sind dabei mit ihrem jeweiligen Eingangsanschluss mit dem vierten Anschluss 8.4 des Ausfahrventils 8 strömungstechnisch verbunden.

Während des Überganges von dem Freilaufbetrieb in den Arbeitsbetrieb sind beide Arbeitsanschlüsse A, B von der Druckquelle 3 über die jeweiligen Rückschlagventile 9.1, 10.1 mit Druck beaufschlagt. Das Fluid strömt dabei von der Druckquelle 3 über das Ausfahrventil 8 und das erste Rückschlagventil 9.1 dem Arbeitsanschluss A und weiterhin von der Druckquelle 3 über das Ausfahrventil 8 und das zweite Rückschlagventil 10.1 dem Arbeitsanschluss B zu.

Ein Ablassventil 11 ist an einen Innenraum 12 des Radialkolbenmotors 4 angeschlossenen. Das Ablassventil 11 ist während des Überganges von dem Freilaufbetrieb in den Arbeitsbetrieb wie in Fig.1c gezeigt geöffnet, um Fluid aus dem Innenraum 12 des Radialkolbenmotors 4 unter geringem Gegendruck zum Tank T hin abfließen zu lassen.

In dem Innenraum 12 sammelt sich während des Arbeitsbetriebs des Radialkolbenmotors 4 Fluid aufgrund von Leckagen, insbesondere von Leckagen zwischen Druckräumen des Radialkolbenmotors 4 und den Kolben 6.

Das Ablassventil 11 ist auch während des Arbeitsbetriebs wie in Fig.1a gezeigt geöffnet, um aufgrund der Leckagen in den Innenraum 12 gelangendes Fluid auch dann aus dem Innenraum 12 des Radialkolbenmotors 4 unter geringem Gegendruck zum Tank T hin abfließen zu lassen. Im Freilaufbetrieb gemäß Fig.1b ist das Ablassventil 11 geschlossen, um zu vermeiden, dass die Kolben 6 aufgrund zu geringen Druckes im Innenraum 12 während des Freilaufes aus ihrer Ruheposition P_{R} herausbewegt werden.

Während eines Überganges von dem Arbeitsbetrieb in den Freilaufbetrieb ist der Innenraum 12 des Radialkolbenmotors 4 mit einem Einfahrdruck beaufschlagt, so dass die Kolben 6 von Ihrer jeweiligen Position mit Kontakt zum Hubring 5 in ihre jeweilige Ruheposition P_{R} bewegt werden.

Der Innenraum 12 wird dabei über einen Leckageanschluss L₁ des Radialkolbenmotors 4 mit dem Einfahrdruck beaufschlagt. Der Leckageanschluss L₁ ist z.B. an einem Gehäuse des Radialkolbenmotors 4 angeordnet und/oder ausgebildet und mit dem Innenraum 12 strömungstechnisch verbunden, insbesondere mittels in dem Gehäuse ausgebildeter Strömungskanäle.

Das Fluid wird während des Überganges von dem Arbeitsbetrieb in den Freilaufbetrieb von der Druckquelle 3 dem Innenraum 12 des Radialkolbenmotors 4 über ein dann geöffnetes Einfahrventil 13 und einen Stromregler 14 zugeführt. Mittels des Stromreglers 14 wird dabei ein konstanter Volumenstrom erzeugt.

Das Einfahrventil 13 ist auch im Freilaufbetrieb gemäß Fig.1b geöffnet, um dann den mittels der Druckquelle 3 bereitgestellten Druck im Innenraum 12 halten zu können. Im Arbeitsbetriebs gemäß Fig.1a und während des Überganges von dem Freilaufbetrieb in den Arbeitsbetrieb gemäß Fig.1c ist das Einfahrventil 13 geschlossen, um zu vermeiden, dass der Innenraum 12 dann mittels der Druckquelle 3 mit Druck beaufschlagt wird.

Zumindest ein weiteres Rückschlagventil 15, 16 ist strömungstechnisch zwischen dem Innenraum 12 und dem Tank T angeordnet, so dass mittels dieses Rückschlagventils 15, 16 eine Fluidströmung vom Innenraum 12 zum Tank T ermöglicht und eine entsprechende Rückströmung vermieden ist. Mittels dieses Rückschlagventils 15, 16 ist ein Druck in dem Innenraum 12 auf einen bestimmten, maximalen Wert, insbesondere von 2 bar, begrenzt. Gemäß Fig.1a-c sind dazu zwei Rückschlagventile, nämlich ein drittes Rückschlagventil 15, und ein viertes Rückschlagventil 16 in Reihe geschaltet, wobei ein jedes dieser beiden Rückschlagventile 15, 16 mit einem Druck von 1 bar vorgespannt ist. Zwischen den beiden Rückschlagventilen 15, 16 ist eine strömungstechnische Verbindung zum zweiten Anschluss 8.2 des Ausfahrventils 8 angeordnet und/oder ausgebildet.

Zumindest ein Rückschlagventil 15, 16 ist mit Bezug zum Innenraum 12 strömungstechnisch parallel zum Stromregler 14 angeordnet. Mittels des zumindest einen Rückschlagventils 15, 16 und des Stromreglers 14 ist somit während des Überganges von dem Arbeitsbetrieb in den Freilaufbetrieb sichergestellt, dass der Druck in dem Innenraum 12 nicht zu groß und nicht zu klein ist, so dass die Kolben 6 mit einer Geschwindigkeit in ihre jeweilige Ruheposition P_{R} eingefahren werden, welche einerseits groß genug ist, um einen reibungslosen Betrieb des Radialkolbenmotors 4 zu ermöglichen und welche anderseits nicht Werte überschreitet, bei welchen ein Risiko einer Beschädigung von Bauteilen des Radialkolbenmotors 4 z.B. der Kolben 6 bestehen würde.

Zumindest ein weiteres, insbesondere fünftes Rückschlagventil 17 ist strömungstechnisch zwischen einem Stellanschluss 18 der Druckquelle 3 und dem Ausfahrventil 8 angeordnet, so dass mittels dieses Rückschlagventils 17 während des Überganges von dem Freilauf in den Arbeitsbetrieb eine Fluidströmung vom Stellanschluss 18 über das Ausfahrventil 8 zum Tank T ermöglicht und eine entsprechende Rückströmung vermieden ist. Das fünfte Rückschlagventil 17 ist mit dem dritten Anschluss 8.3 des Ausfahrventils 8 strömungstechnisch verbunden. Über das fünfte Rückschlagventil 17 ist der Stellanschluss 18 mit dem Tank T verbunden, und verhindert einen höheren von der Druckquelle 3 bereitgestellten Druck als eine Grundeinstellung der Druckquelle 3 insbesondere von 15 bar, während des Überganges von dem Freilauf in den Arbeitsbetrieb.

Zwischen den beiden Arbeitsanschlüssen A, B des zumindest einen Radialkolbenmotors 4 und dem Stellanschluss 18 der Druckquelle 3 ist eine Wechselventil-Kaskade 19 strömungstechnisch angeordnet, so dass der Stellanschluss 18 mit dem maximalen, an einem der Arbeitsanschlüsse A, B anliegenden Druck beaufschlagt wird. Dies stellt eine weitere zur bereits oben dargestellten Möglichkeit mit einem Drucksensor dar, den maximalen, an einem der Arbeitsanschlüsse A, B anliegende Druck an eine Steuerungs- und/oder Regelungseinrichtung der Druckquelle 3 zu übermitteln. Fig.1a-c zeigen jeweils zwei Radialkolbenmotoren mit zugehörigen Teilen des Ventilsystems, aber bis auf die Wechselventil-Kaskade 19 sind nur einer der Radialkolbenmotoren und die zugehörigen Teile des Ventilsystems der Übersichtlichkeit wegen mit Bezugszeichen versehen. Von der Funktion her gleichen sich die zwei Radialkolbenmotoren und die zugehörigen Teile des Ventilsystems 2. Die jeweiligen, einer der zwei Radialkolbenmotoren zugeordneten Teile des Ventilsystems 2 sind mit jeweils strichpunktierter, ein Rechteck ausbildender Linien umrandet.

Ein Stelldruck-Begrenzungsventil 20 ist strömungstechnisch zwischen dem Stellanschluss 18 der Druckquelle 3 und dem Tank T angeordnet, um den an dem Stellanschluss 18 anliegenden Druck auf einen bestimmten, maximalen Wert zu begrenzen.

Ein erstes Arbeitsdruck-Begrenzungsventil 21 und ein zweites Arbeitsdruck-Begrenzungsventil 22 sind strömungstechnisch jeweils zwischen einem der Arbeitsanschlüsse A, B und dem Tank T angeordnet, um den Fluidstrom zwischen den Arbeitsanschlüssen A, B und der Wechselventil-Kaskade 19 zu begrenzen.

Das Stelldruck-Begrenzungsventil 20 ist dabei dem Stellanschluss 18 unmittelbar vorgeschaltet. Die Arbeitsdruck-Begrenzungsventile 21, 22 sind mit jeweils einem zwischen dem jeweiligen Arbeitsanschluss A bzw. B und der Wechselventilkaskade 19 angeordneten und/oder ausgebildeten Abzweig strömungstechnisch verbunden.

Ein Förderdruck-Begrenzungsventil 23 ist strömungstechnisch zwischen der Druckquelle 3 und dem Tank T angeordnet, um den Fluidstrom von der Druckquelle 3 zu den Arbeitsanschlüssen A, B hin zu begrenzen.

Von der Druckquelle 3 führt eine Strömungsverbindung unmittelbar zum Förderdruck-Begrenzungsventil 23 und eine weitere Strömungsverbindung führt unmittelbar zu dem ersten Anschluss 8.1 des Ausfahrventils 8.

Der Arbeitsanschluss A ist einerseits unmittelbar mit dem ersten Nachsaugventil 9 und anderseits unmittelbar mit einem ersten Motoranschluss eines Wegeventils 24 strömungstechnisch verbunden. Der Arbeitsanschluss B ist einerseits unmittelbar mit dem zweiten Nachsaugventil 10 und anderseits unmittelbar mit einem zweiten Motoranschluss des Wegeventils 24 strömungstechnisch verbunden. Dem Radialkolbenmotor 4 abgewandt, weist das Wegeventil 24 zwei Anschlüsse zur Wechselventil-Kaskade 19, einen mit dem dritten Anschluss des Ausfahrventils, insbesondere mittels eines Absperrventils, strömungstechnisch verbundenen Anschluss und einen mit dem vierten Anschluss des Ausfahrventils strömungstechnisch verbunden Anschluss auf. Das Wegeventil 24 ist in drei Ventilstellungen schaltbar. In einer ersten Ventilstellung des Wegeventils 24 ist der Arbeitsanschluss A mittels der Druckquelle 3 mit Druck beaufschlagbar und in einer zweiten Ventilstellung des Wegeventils 24 ist der Arbeitsanschluss B mittels der Druckquelle 3 mit Druck beaufschlagbar, so dass in der einer ersten Ventilstellung des Wegeventils 24 eine Drehrichtung der Triebwelle des Radialkolbenmotors 4 erreichbar ist, welche der in einer zweiten Ventilstellung des Wegeventils 24 erreichbaren Drehrichtung entgegensetzt ist. In einer dritten Ventilstellung des Wegeventils 24 ist sind Strömungen durch das Wegeventil 24 vermeidbar. Alternativ ist analog auch der Einsatz von einem Wegeventil denkbar, welches in nur zwei Ventilstellungen anordenbar ist.

Es sind vorzugsweise vier Radialkolbenmotoren 4 vorgesehen und vorhanden, um jeweils ein Rad eines Fahrzeuges, insbesondere eines Straßendeckenfertigers, anzutreiben.

Das Ventilsystem 2 weist dazu weitere Bauteile auf, welche den Bauteilen entsprechen, welche in Fig.1a-c jeweils mit strichpunktierten, jeweils ein Rechteck ausbildenden Linien umrandet sind, welche dann jeweils einem weiteren Radialkolbenmotor zugeordnet sind. Die Druckquelle 3 dient dann dem Antrieb und der Ansteuerung aller vier Radialkolbenmotoren 4.

Die Leckageanschlüsse L₁, L₂, L₃, L₄ eines jeden der vier Radialkolbenmotoren 4 sind strömungstechnisch zusammengefasst und gemeinsam strömungstechnisch mit dem Ablassventil 11 und dem strömungstechnisch zwischen dem Innenraum 12 und dem Tank T angeordneten Rückschlagventil 15, 16 verbunden, um den Druck in den jeweiligen Innenräumen 12 auf einen bestimmten, maximalen Wert, insbesondere von 2 bar, zu begrenzen.

Wenn nur zwei Radialkolbenmotoren vorgesehen sind, sind die Leckageanschlüsse L₃, L₄ nicht vorhanden bzw. entsprechend verschlossen.

### Bezugszeichenliste

- 1: Antriebssystem
- 2: Ventilsystem
- 3: Druckquelle
- 4: Radialkolbenmotor
- 5: Hubring
- 6: Kolben
- 7: Triebwelle
- 8: Ausfahrventil
- 8a: Ausfahrventilstellung
- 8f: Fahrventilstellung
- 9: erstes Nachsaugventil
- 9.1: erstes Rückschlagventil
- 9.2: erstes Druckbegrenzungsventil
- 10: zweites Nachsaugventil
- 10.1: zweites Rückschlagventil
- 10.2: zweites Druckbegrenzungsventil
- 11: Ablassventil
- 12: Innenraum
- 13: Einfahrventil
- 14: Stromregler
- 15: drittes Rückschlagventil
- 16: viertes Rückschlagventil
- 17: fünftes Rückschlagventil
- 18: Stellanschluss
- 19: Wechselventil-Kaskade
- 20: Stelldruck-Begrenzungsventil
- 21: erstes Arbeitsdruck-Begrenzungsventil
- 22: zweites Arbeitsdruck-Begrenzungsventil
- 23: Förderdruck-Begrenzungsventil
- 24: Wegeventil
- A, B: Arbeitsanschlüsse
- u: Umfangrichtung
- P_{R}: Ruheposition
- T: Tank
- L₁, L₂, L₃, L₄: Leckageanschlüsse der Radialkolbenmotoren

## Patentansprüche

1. Antriebssystem (1) mit einem Ventilsystem (2), zumindest einer Druckquelle (3) und zumindest einem Radialkolbenmotor (4), welcher einen Hubring (5), mehrere Kolben (6), eine Triebwelle (7) und zwei Arbeitsanschlüsse (A, B) aufweist, welche mittels des Ventilsystems (2) wahlweise mit der Druckquelle (3), insbesondere einer Hubvolumen-verstellbaren Axialkolbenmaschine, strömungstechnisch verbindbar sind, um in einem Arbeitsbetrieb des Radialkolbenmotors (4) ein unter einem Arbeitsdruck stehendes Fluid einem der zwei Arbeitsanschlüsse (A oder B) zuzuführen, so dass die Kolben (6) an dem Hubring (5) anliegend in Umfangrichtung (u) an dem Hubring (5) entlanglaufen, so dass die Triebwelle (7) angetrieben wird, wobei in einem Freilaufbetrieb des Radialkolbenmotors (4) die Kolben (6) in einer jeweiligen Ruheposition (P_{R}) haltbar sind, in welcher ein Kontakt zwischen dem Hubring (5) und den Kolben (6) vermieden ist, so dass auch bei einer Drehung der Triebwelle (7) kein Fluid mittels der Kolben (6) von einem (A oder B) zu dem anderen Arbeitsanschluss (B oder A) förderbar ist, **dadurch gekennzeichnet, dass** bei einem Übergang von dem Freilaufbetrieb in den Arbeitsbetrieb beide Arbeitsanschlüsse (A, B) mittels des Ventilsystems (2) und der Druckquelle (3) mit einem Ausfahrdruck beaufschlagt sind, so dass die Kolben (6) von ihrer jeweiligen Ruheposition (P_{R}) in Richtung des Hubringes (5) bewegt werden, bis ein jeder der Kolben (6) an dem Hubring (5) anliegt.

2. Antriebssystem (1) nach Anspruch 1, **dadurch gekennzeichnet, dass** der Ausfahrdruck um eine bestimmte Druckdifferenz größer ist, als ein an der Druckquelle (3) gemeldeter Druck.

3. Antriebssystem (1) nach Anspruch 1 oder 2, **dadurch gekennzeichnet, dass** ein Ausfahrventil (8) strömungstechnisch zwischen den beiden Arbeitsanschlüssen (A, B) einerseits und der Druckquelle (3) und einem Tank (T) anderseits angeordnet ist, um in einer Ausfahrventilstellung (8a) bei dem Übergang von dem Freilaufbetrieb in den Arbeitsbetrieb beide Arbeitsanschlüsse (A, B) mit dem Ausfahrdruck zu beaufschlagen und um in einer Fahrventilstellung (8f) in dem Freilaufbetrieb oder dem Arbeitsbetrieb keinen oder nur einen der beiden Arbeitsanschlüsse (A, B) mit einem Druck zu beaufschlagen.

4. Antriebssystem (1) nach einem der Ansprüche 1 bis 3, **dadurch gekennzeichnet, dass** beide Arbeitsanschlüsse (A, B) mit jeweils einem Nachsaugventil (9, 10) mit einem Rückschlagventil (9.1, 10.1) und einem strömungstechnisch parallel dazu geschalteten Druckbegrenzungsventil (9.2, 10.2) strömungstechnisch verbunden sind, und mittels der Rückschlagventile (9.1, 10.1) eine Fluidströmung vom dem Ausfahrventil (8) zum dem jeweiligen Arbeitsanschluss (A, B) ermöglicht und eine entsprechende Rückströmung vermieden ist, und mittels der Druckbegrenzungsventile (9.2, 10.2) ein Druck an den jeweiligen Arbeitsanschlüssen (A, B) auf einen bestimmten, maximalen Wert begrenzt ist.

5. Antriebssystem (1) nach Anspruch 4, **dadurch gekennzeichnet, dass** während des Überganges von dem Freilaufbetrieb in den Arbeitsbetrieb beide Arbeitsanschlüsse (A, B) von der Druckquelle (3) über die jeweiligen Rückschlagventile (9.1, 10.1) mit Druck beaufschlagt sind.

6. Antriebssystem (1) nach einem der Ansprüche 1 bis 5, **dadurch gekennzeichnet, dass** ein Ablassventil (11) an einen Innenraum (12) des Radialkolbenmotors (4) angeschlossenen ist, welches während des Überganges von dem Freilaufbetrieb in den Arbeitsbetrieb geöffnet ist, um Fluid aus dem Innenraum (12) des Radialkolbenmotors (4) unter geringem Gegendruck zum Tank (T) hin abfließen zu lassen.

7. Antriebssystem (1) nach einem der Ansprüche 1 bis 6, **dadurch gekennzeichnet, dass** während eines Überganges von dem Arbeitsbetrieb in den Freilaufbetrieb der Innenraum (12) des Radialkolbenmotors (4) mit einem Einfahrdruck beaufschlagt ist, so dass die Kolben (6) von Ihrer jeweiligen Position mit Kontakt zum Hubring (5) in ihre jeweilige Ruheposition (P_{R}) bewegt werden.

8. Antriebssystem (1) nach Anspruch 7, **dadurch gekennzeichnet, dass** das Fluid während des Überganges von dem Arbeitsbetrieb in den Freilaufbetrieb von der Druckquelle (3) dem Innenraum (12) des Radialkolbenmotors (4) über ein dann geöffnetes Einfahrventil (13) und einen Stromregler (14) zugeführt wird.

9. Antriebssystem (1) nach einem der Ansprüche 7 oder 8, **dadurch gekennzeichnet, dass** zumindest ein weiteres Rückschlagventil (15, 16) strömungstechnisch zwischen dem Innenraum (12) und dem Tank (T) angeordnet ist, so dass mittels dieses Rückschlagventils (15, 16) eine Fluidströmung vom Innenraum (12) zum Tank (T) ermöglicht und eine entsprechende Rückströmung vermieden ist, und mittels dieses Rückschlagventils (15, 16) ein Druck in dem Innenraum (12) auf einen bestimmten, maximalen Wert, insbesondere von 2 bar, begrenzt ist.

10. Antriebssystem (1) nach einem der Ansprüche 1 bis 9, **dadurch gekennzeichnet, dass** zumindest ein weiteres Rückschlagventil (17) strömungstechnisch zwischen einem Stellanschluss (18) der Druckquelle (3) und dem Ausfahrventil (8) angeordnet ist, so dass mittels dieses Rückschlagventils (17) während des Überganges von dem Freilauf in den Arbeitsbetrieb eine Fluidströmung vom Stellanschluss (18) über das Ausfahrventil (8) zum Tank (T) ermöglicht und eine entsprechende Rückströmung vermieden ist.

11. Antriebssystem (1) nach Anspruch 10, **dadurch gekennzeichnet, dass** zwischen den beiden Arbeitsanschlüssen (A, B) des zumindest einen Radialkolbenmotors (4) und dem Stellanschluss (18) der Druckquelle (3) eine Wechselventil-Kaskade (19) strömungstechnisch angeordnet ist, so dass der Stellanschluss (18) mit dem maximalen, an einem der Arbeitsanschlüsse (A, B) anliegenden Druck beaufschlagt wird.

12. Antriebssystem (1) nach einem der Ansprüche 10 oder 11, **dadurch gekennzeichnet, dass** ein Stelldruck-Begrenzungsventil (20) strömungstechnisch zwischen dem Stellanschluss (18) der Druckquelle (3) und dem Tank (T) angeordnet ist, um den an dem Stellanschluss (18) anliegenden Druck auf einen bestimmten, maximalen Wert zu begrenzen.

13. Antriebssystem (1) nach einem der Ansprüche 11 bis 12, **dadurch gekennzeichnet, dass** Arbeitsdruck-Begrenzungsventile (21, 22) strömungstechnisch jeweils zwischen einem der Arbeitsanschlüsse (A, B) und dem Tank (T) angeordnet sind, um den Fluidstrom zwischen den Arbeitsanschlüssen (A, B) und der Wechselventil-Kaskade (19) zu begrenzen.

14. Antriebssystem (1) nach einem der Ansprüche 1 bis 13, **dadurch gekennzeichnet, dass** ein Förderdruck-Begrenzungsventil (23) strömungstechnisch zwischen der Druckquelle (3) und dem Tank (T) angeordnet ist, um den Fluidstrom von der Druckquelle (3) zu den Arbeitsanschlüssen (A, B) hin zu begrenzen.

15. Antriebssystem (1) nach einem der Ansprüche 1 bis 14, **dadurch gekennzeichnet, dass** vier Radialkolbenmotoren (4) vorgesehen und vorhanden sind, um jeweils ein Rad eines Fahrzeuges, insbesondere eines Straßendeckenfertigers, anzutreiben.

16. Antriebssystem (1) nach Anspruch 15, **dadurch gekennzeichnet, dass** die Leckageanschlüsse (L₁, L₂, L₃, L₄) eines jeden der vier Radialkolbenmotoren (4) strömungstechnisch zusammengefasst und gemeinsam strömungstechnisch mit dem Ablassventil (11) und dem strömungstechnisch zwischen dem Innenraum (12) und dem Tank (T) angeordneten Rückschlagventil (15, 16) verbunden sind, um den Druck in den jeweiligen Innenräumen (12) auf einen bestimmten, maximalen Wert, insbesondere von 2 bar, zu begrenzen.
